# EUROPÄISCHE PATENTSCHRIFT

(11) **EP 0 309 758 B1**
(45) Veröffentlichungstag und Bekanntmachung des Hinweises auf die Patenterteilung: **25.05.1994**
(21) Anmeldenummer: 88114266.5
(22) Anmeldetag: 01.09.1988
(51) Int. Cl.: G01N 27/84, G01N 27/82

(54) **Verfahren und Vorrichtung zum Feststellen und Auswerten von Oberflächenrissen bei Werkstücken**
Procedure and facility for determination and evaluation of surface cracks on workpieces
Procédé et dispositif pour constater et évaluer des fissures superficielles sur des pièces à usiner

(30) Priorität: 23.09.1987 DE 3731947
(43) Veröffentlichungstag der Anmeldung: 05.04.1989
(73) Patentinhaber: ISOTOPEN-TECHNIK DR. SAUERWEIN GMBH, D-42781 Haan (DE); FORD-WERKE AKTIENGESELLSCHAFT, 50725 Köln (DE)
(72) Erfinder: Sauerwein, Kurt, Dr., VERSTORBEN (DE); Busse, Hans Peter, D-5600 Wuppertal 11 (DE); Link, Rainer, Dr., D-5014 Kerpen-Horrem (DE); Wiacker, Helmut, D-5010 Hilden (DE); Stapf, Christian, D-5600 Wuppertal 2 (DE); Schulz, Rüdiger, D-5600 Wuppertal (DE); Stolzenberg, Ekhard, D-5603 Wülfrath (DE); Disselhorst, Kurt, D-5650 Solingen 1 (DE); Burghoff, Herbert, D-5632 Wermelskirchen (DE); Kirchesch, Karl, D-4000 Düsseldorf 1 (DE); Lean, James Dudley, London SE6 2LT (GB); Topping, Laurence Frederick, Romford Essex (GB); Zindler, Wolfgang, D-4047 Dormagen 5 (DE)
(74) Vertreter: König, Reimar, Dr.-Ing.

(56) Entgegenhaltungen:
- DE-A- 2 544 102
- DE-A- 3 106 803
- DE-A- 3 440 473
- WAHL, Friedrich M. : "Digitale Bildsignalverarbeitung-Grundlagen, Verfahren, Beispiele", Springer Verlag 1984, Berlin, DE

## Beschreibung

Die Erfindung betrifft ein Verfahren und eine Vorrichtung zum Feststellen von Oberflächenrissen bei Werkstücken, bei dem mittels einer Bildaufnahmekamera ein Bild der Werkstückoberfläche aufgenommen, digitalisiert und mittels eines Rechners in der Weise verarbeitet wird, daß eine Binärbild etwaig vorhandener Risse erzeugt und bei Überschreiten eines vorgegebenen Schwellwertes ein Sortierbefund ausgelöst werden.

Ein derartiges Verfahren und eine entsprechende Vorrichtung sind aus der DE-OS 34 40 473 bekannt.

Rißerkennungsverfahren sind insbesondere bei der Massenerzeugung von sicherheitstechnisch besonders wichtigen Komponenten erforderlich, da Oberflächenrisse eine erhebliche Gefährdung darstellen. Dies gilt besonders für Kraftfahrzeugkomponenten, die in großer Stückzahl hergestellt werden, jedoch einzeln auf das Vorhandensein von Rissen untersucht werden müssen. Das visuelle Auswerten der Fehleranzeigen durch einen Prüfer bedeutet eine erhebliche Belastung, da die Fehlerauftrittswahrscheinlichkeit sehr gering ist und sich dies auf die Konzentrationsfähigkeit des Prüfers auswirkt. Hierunter leidet die Fehlernachweiswahrscheinlichkeit.

Bei dem bekannten Verfahren wird die Prüfung automatisch durchgeführt, indem die Bildinformation des Kamerabildes der Grauwerte digitalisiert und die so erhaltenen Digitalwerte als eine Matrix von Bildpunkten in einem Halbleiterspeicher abgelegt werden. Mittels eines Rechners wird hieraus in einem ersten Verarbeitungsschritt ein Binärbild hergestellt, aus dem in einem zweiten Verarbeitungsschritt alle Anzeigen linien- und punktförmiger Strukturen eliminiert werden, deren Ausdehnung eine vorgegebene Anzahl von Bildpunkten nicht überschreitet. In einem dritten Verarbeitungsschritt werden die danach verbliebenen Anzeigen flächiger Strukturen in jeder Abbildungsrichtung auf eine ihre ursprüngliche Ausdehnung um mindestens eine Bildpunkt überschreitende Ausdehnung verbreitert; das so erhaltene Binärbild wird als eine alle flächigen Strukturen abdeckende Maske von dem Ausgangs-Binärbild abgezogen. Schließlich wird das danach verbleibende Binärbild zwecks Auswertung zeilen- bzw. spaltenweise abgetastet. Die dabei detektierten Anzeigen enthaltenden Bildpunkte werden gezählt, wobei ein Sortierbefund ausgelöst wird, wenn beim Abtasten einer Serie von unmittelbar benachbarten Bildpunkten eine vorgebbare Mindestanzahl von Anzeigen gezählt worden ist.

Da bei dem bekannten Verfahren im ersten Schritt ein Binärbild erzeugt wird, ist eine einfache Verbesserung des Signal-Rausch-Verhältnisses nicht möglich. Des weiteren ist das Binärbild, das nach dem bekannten Verfahren erzeugt wird, nicht unabhängig von der absoluten Helligkeit des Originalbildes und sind auch keine Veränderungen der Anlage, beispielsweise ein Nachlassen der Belichtungsintensität, eine Änderung der Zusammensetzung der Rißdarstellungsmittel und Staubeinwirkungen darstellbar. Auch die Verwendung einer schwarz-weiß Fernsehkamera schränkt die Möglichkeiten einer analogen Signalvorverarbeitung stark ein.

Das Buch Friedrich M. Wahl : "Digitale Bildsignalverarbeitung", Berlin, 1984 offenbart übliche Verfahreusschritte bei der Bildverarbeitung, wie z.B. HochpaßFilterung.

Der Erfindung leigt daher die Aufgabe zugrunde, ein Verfahren und eine Vorrichtung zu schaffen, die eine für die industrielle Massenherstellung geeignete Möglichkeit schafft, bei der automatischen Rißerkennung und -auswertung ein möglichst hohes Auflösungsvermögen unter Ausschaltung von Umwelteinflüssen und Hintergrundstörungen zu erreichen.

Diese Aufgabe wird gelöst durch ein Verfahren gemäß Auspruch 1.

Durch das optische Filter wird im wesentlichen nur das bei der Beleuchtung der Werkstücke durch die Rißdarstellungsmittel erzeugte Fluoreszenzlicht zum Aufnahmeteil der Kamera hindurch gelassen, so daß das auszuwertende Bild von einem Hintergrund und/oder Störsignal getrennt wird, während andere Signale gefiltert und/oder verstärkt werden. Durch die Hochpaßfilterung des Orginalbildes bzw. die Subtraktion der TieFpaßversion vom Originalbild ergibt sich ein digitalisiertes Grauwertbild, das keine sich im Ortsraum langsam verändernden Strukturen aufweist, sondern nur noch Anteile mit hohen Ortsfrequenzen, beispielsweise solche mit rißähnlichen Strukturen. Die Binärisierung des Grauwertbildes mittels einer dynamischen Grauwertschwelle führt dazu, daß sich das nach dem erfindungsgemäßen Verfahren arbeitende automatische Auswertesystem in einer Produktionsanlage einsetzen läßt, da Veränderungen der Anlage, beispielsweise ein Nachlassen der Beleuchtungsintensität, eine Änderung der Zusammensetzung der Rißdarstellungsmittel oder Staubeinwirkungen keinen oder nur einen geringfügigen Einfluß auf die Auswertung haben. Des weiteren lassen sich diese Änderungen durch den Vergleich mit zuvor ausgewerteten Teilen erkennbar machen.

Die Prüfung der Bildpunkte des Binärbildes hinsichtlich der Plausibilität einer Rißanzeige vermeidet, daß Pseudoanzeigen von rißähnlichen Strukturen einen Sortierbefund auslösen.

Um das Signal-Rausch-Verhältnis bei den digitalisierten Grauwertstufen zu verbessern, können einige der mit der Kamera aufgenommenen Fernsehbilder in Fernsehechtzeit aufaddiert werden. Bei einer Bildfrequenz von 25 Bildern je Sekunde und einer Integrationszeit von 1 bis 2 Sekunden ergibt dies 25 bis 50 integrierte Bilder, deren Grauwertstufen einen erheblich verminderten Rauschhintergrund aufweisen.

Es kann sich empfehlen, mit Hilfe des Magnetpulver- oder Farbeindringverfahrens und/oder mit Kontrastverstärkungsmitteln die Werkstückoberfläche vorzubehandeln, um Risse vorzugsweise farblich deutlich sichtbar zu machen.

Eine Vorrichtung zum Durchführen des erfindungsgemäßen Verfahrens ist im Anspruch 4 definiert.

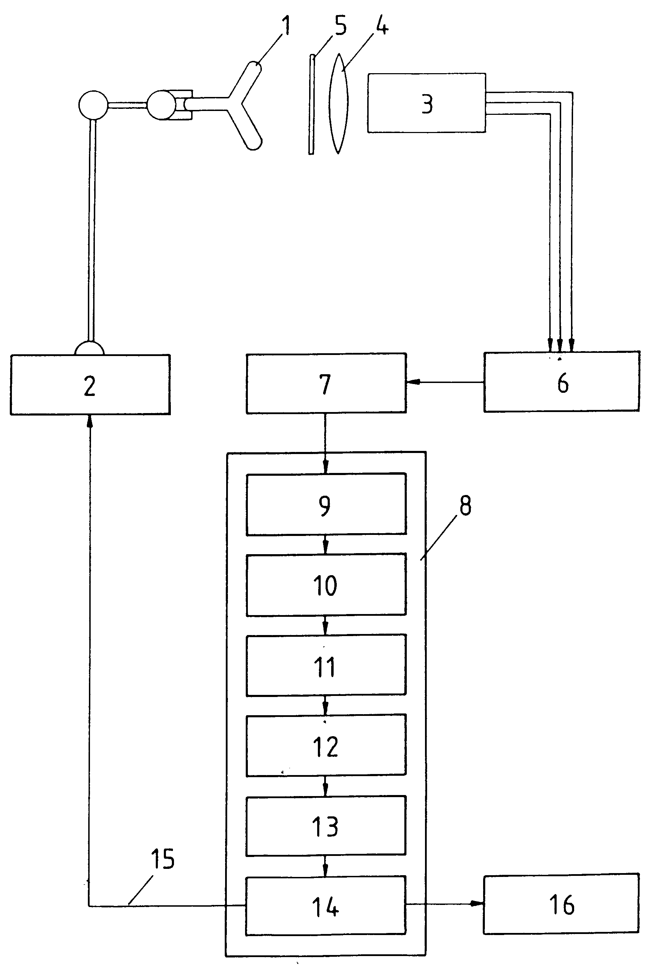

Die Erfindung wird nachfolgend anhand eines in der Zeichnung schematisch dargestellten Ausführungsbeispiels des näheren erläutert.

Ein von einem Handhabungsgerät 2 bewegbares Werkstück 1 befindet sich zur Erkennung von Rissen vor einer Farbfernsehkamera 3 mit einem Objektive 4 und einem davor angeordneten optischen Filter 5. Das Werkstück 1 ist nach dem Magnetpulver- oder Farbeindringverfahren, gegebenenfalls unter Einsatz von Kontrastverstärkungsmitteln, behandelt und wird mittels einer nicht dargestellten Lichtquelle so beleuchtet, daß etwaige von der Oberfläche ausgehende Risse durch von diesen Rissen ausgehendes Fluoszenzlicht erkennbar werden.

Mit Hilfe des optischen Filters 5 läßt sich das Hintergrundbild weitgehend ausblenden, so daß im wesentlichen das Fluoszenzlicht durch das Objektiv 4 in den Aufnahmeteil der Farbfernsehkamera 3 gelangt. Die Farbfernsehkamera erzeugt Signale für die Farben Rot, Grün und Blau, die einer Farbmischeinheit 6 zugeleitet werden. Mit Hilfe dieser elektronischen Farbmischeinheit 6 lassen sich die Farben in beliebigem Verhältnis miteinander mischen, um mögliche weitere Hintergrund- oder Störsignale auszufiltern oder bestimmte Bereiche des Bildes hervorzuheben. In der Farbmischeinheit 6 erfolgt somit eine analoge Signalvorverarbeitung.

Über einen Analog-Digital-Signalwandler 7 gelangt das Bild in eine digitale Bildverarbeitungseinheit 8, wo es in Grauwertstufen zerlegt in einen Bildspeicher aufgenommen wird. Um das Signal-Rausch-Verhältnis zu verbessern, werden einige Fernsehbilder in Fernsehechtzeit aufaddiert. Dies ergibt bei einer Bildfrequenz von 25 Bilder je Sekunde und einer Integrationszeit von 1 bis 2 Sekunden 25 bis 50 integrierte Bilder. Dieser Schritt der Verbesserung des Signal-Rausch-Verhältnisses ist in der Zeichnung mit der Bezugsziffer 9 bezeichnet. Der nächste, mit der Bezugsziffer 10 bezeichnete Schritt besteht darin, aus dem ursprünglichen Grauwertbild ein verschwommenes Hintergrundbild zu erzeugen, indem dieses ein Low-Pass-Filter durchläuft oder einer anderen mathematischen Operation unterzogen wird.

Im nächsten Schritt 11 wird das verschwommene Hintergrundbild vom ursprünglichen Bild subtrahiert, um ein Differenzbild zu gewinnen, das keine sich langsam im Ortsraum veränderlichen Strukturen enthält, sondern nur noch Anteile mit hohen Ortsfrequenzen, beispielsweise rißähnliche Strukturen. Der Schritt 12 besteht in einer rechnerischen Analyse der Grauwertverteilung im ursprünglichen Bild und im Differenzbild sowie in einem Vergleich dieser Werte mit denjenigen mindestens eines vorher ausgewerteten Werkstücks. Bei dieser Analyse lassen sich Veränderungen der Gesamtanlage aus Kamera, Lampen, Rißdarstellungsmitteln usw. feststellen und eine dynamische Grauwertschwelle zur Ermittlung eines Fehlersignals festsetzen. Mit Hilfe dieser dynamisch gesetzten Grauwertschwelle wird aus dem Grauwertbild ein Binärbild, in dem alle Grauwerte des Grauwertbildes, die oberhalb der gesetzten Schwelle liegen, hell erscheinen und umgekehrt.

Im Schritt 13 wird das Binärbild analysiert, indem alle Binärinformationen, die auf keine rißähnliche Struktur hinweisen, verworfen werden, während noch vorhandene, über der eingestellten Schwelle liegende Bildpunkte als Fehler angezeigt, in einem Signalwandler 14 verarbeitet und als Steuersignale über eine Steuerleitung 15 zum Handhabungsgerät 2 und zu einer Anzeige- und Registriervorrichtung 16 geleitet werden.

Es kann auch im Originalbild eine Hochpaßfilterung durchgeführt werden, um die Rißdarstellung zu erhalten. Zunächst wird das von der Fernsehkamera aufgenommene relativ verrauschte Bild wieder über einige Fernsehbilder integriert, d.h. die Bilder werden aufsummiert und auf 256 Grauwerte normiert. Dieses Bild wird mit einer Filtermatrix hochpaßgefiltert. Dies entspricht einer Lowpaßfilterung (Erzeugung eines Hintergrundbildes) und Differenz zum Originalbild. Die benutzte Hochpaßfilktermatrix besteht aus 7 x 7 Matrixelementen, die an das Prüfproblem angepaßt sind.

Im Hochpaßbild werden Mittelwerte der Grauwertverteilung und Standardabweichung des Rauschanteils gebildet. Hieraus wird der Schwellenwert berechnet. Das Grauwertbild wird, wie schon beschrieben, durch die Schwellwertoperation in ein Binärbild umgewandelt.

Die Koordinaten der verbleibenden Binärpunkte werden ermittelt. Rißanzeigen, die z.B. von weniger als 4 Pixel (Bildelemente) unterbrochen sich, werden zunächst ergänzt und vervollständigt. Danach wird das Längen- zu Breitenverhältnis ermittelt. Ist dieses größer als ein erster Rißerkennungsschwellwert, z.B. 2, wird es als Rißanzeige identifiziert, vorausgesetzt, die Gesamtzahl der Pixel ist größer als ein anderer Rißerkennungsschwellwert, z.B 20. Die angegebenen numerischen Werte für die Rißerkennungsschwellwerte sind dem Prüfproblem anzupassen, so daß für einen bestimmten Gegenstand eine Rißerkennung mit geringstmöglichem Rechneraufwand sicher erreichbar ist.

Mit dem erfindungsgemäßen Verfahren und der Vorrichtung lassen sich in einfacher Weise Oberflächenrisse von Werkstücken feststellen und die Werkstücke aussortieren. Das Verfahren ist hochempfindlich und weitgehend unberührt von Umwelteinflüssen sowie unabhängig von der Werkstückgeometrie. Gleichzeitig lassen sich Veränderungen in der Anlage feststellen und abstellen.

## Patentansprüche

1. Verfahren zum Feststellen und Auswerten von Oberflächenrissen auf Werkstücken, bei dem die Werkstückoberfläche mit Rißdarstellungsmitteln vorbehandelt wird, mittels einer Bildaufnahmekamera ein Bild der Werkstückoberfläche aufgenommen, in digitalisierte Grauwertstufen zerlegt und mittels eines Rechners in der Weise verarbeitet wird, daß ein Binärbild etwaiger Risse erzeugt und bei Überschreiten eines vorgegebenen, für das Vorhandensein von Rissen charakteristischen Rißerkennungsschwellwerts ein Sortierbefund ausgelöst wird, dadurch gekennzeichnet, daß
- die Bildaufnahme mittels einer Farbkamera erfolgt, bei der das Hintergrundbild mit Hilfe eines auf das von den Rißdarstellungsmitteln ausgehende Licht abgestimmten Filters ausgeblendet wird,
- aus den Bildwerten in digitalisierte Grauwertstufen zerlegte Grauwertbilder erzeugt, das ursprüngliche Grauwertbild einer Hochpaßfilterung unterzogen bzw. von einer Tiefpaßversion des Grauwertbildes subtrahiert wird,
- das so erhaltene Grauwertbild binärisiert wird, indem im Hochpaß- bzw. Differenzbild Mittelwerte der Grauwertverteilung und Standardabweichungen des Rauschanteils und daraus eine dynamische Grauwertschwelle berechnet und nur die Grauwerte des Grauwertbildes, die oberhalb der Grauwertschwelle liegen, als Binärbildpunkte verwendet werden,
- die Bildpunkte des Binärbildes durch Vergleich ihres Längen-Breiten-Verhältnisses und/oder ihrer Fläche mit dem Rißerkennungsschwellwert auf Plausibilitat in der Rißanzeige geprüft werden,
- alle Binärinformationen, die auf keine rißähnliche Strukturen hinweisen, verworfen und verbleibende Bildpunkte als Fehler angezeigt und/oder registriert und/oder als Steuersignale einem Handhabungsgerät zugeleitet werden.

2. Verfahren nach Anspruch 1, dadurch gekennzeichnet, daß mehrere, in Grauwertstufen zerlegte Bilder aufaddiert werden.

3. Verfahren nach Anspruch 1 oder 2, dadurch gekennzeichnet, daß die Werkstückoberfläche mit Hilfe des Magnetpulver- oder Farbeindringverfahrens und/oder Kontrastverstärkungsmitteln vorbehandelt wird.

4. Vorrichtung zum Feststellen und Auswerten von Oberflächenrissen auf Werkstücken (1), deren Oberfläche mit Rißdarstellungsmitteln vorbehandelt ist, enthaltend gemäß dem Verfahren nach den Ausprüchen 1-3 eine Bildaufnahmekamera (3), von der das aufgenommene Bild der Werkstückoberfläche einer digitalen Bildverarbeitungseinheit (8) zugeleitet, wo das in digitale Grauwertstufen zerlegte Bild in der Weise verarbeitet wird, daß ein Binärbild etwaiger Risse erzeugt und bei Überschreiten eines vorgegebenen, für das Vorhandensein von Rissen charakteristischen Rißerkennungsschwellwertes ein Sortierbefund ausgelöst wird, gekennzeichnet durch ein das Werkstück (1) haltendes Handhabungsgerät (2), eine mit einem auf das von den Rißdarstellungsmitteln ausgehende Licht abgestimmten optischen Filter (5) versehene Farbfernsehkamera (3), eine nachgeschaltete Farbmischeinheit (6) zum Mischen der Farben Rot, Grün und Blau in einem solchen Verhältnis, daß Hintergrund- und Störsignale ausgefiltert oder bestimmte Bereiche des Bildes hervorgehoben werden, einen Analog-Digital-Wandler (7) und eine digitale Bildverarbeitungseinheit (8) mit einem Bildspeicher und einer Rechnereinheit, in der aus den Bildwerten in die digitalisierte Grauwertstufen zerlegte Grauwertbilder erzeugt, das ursprüngliche Grauwertbild einer Hochpaßfilterung unterzogen bzw. von einer Tiefpaßversion des Grauwertbildes subtrahiert wird, das so erhaltene Grauwertbild nach Berechnung einer dynamischen Grauwertschwelle binärisiert, die Bildpunkte des Binärbildes mittels des Rißerkennungsschwellwerts auf Plausibilitat einer Rißanzeige geprüft und alle Binärinformationen, die auf keine rißähnlichen Strukturen hinweisen, verworfen werden, wobei verbleibende Bildpunkte als Fehler angezeigt und/oder registriert und/oder als Steuersignale einem Handhabungsgerät zugeleitet werden.

## Claims

1. Method of detecting and evaluating surface cracks on workpieces, in which the workpiece surface is pre-treated with crack revealing agents, an image of the workpiece surface is taken with an imaging camera, is resolved into digitised gray scale steps and is processed by means of a computer in such a manner that a binary image of possible cracks is produced and, when a predetermined crack recognition threshold value - characteristic of the presence of cracks - is exceeded, a discrimination result is triggered, characterised in that
- the imaging is effected by means of a colour camera, with which the background image is cut out with the aid of a filter tuned to the light produced by the crack revealing agents,
- from the image values, gray scale images, resolved into digitised gray scale steps, are produced, the original gray scale image is subjected to high-pass filtering or is subtracted from a low-pass version of the gray scale image,
- the so obtained gray scale image is binarised, in that, in the high-pass or difference image, middle values of the gray scale distribution and standard deviations of the noise component, and therefrom a dynamic gray scale value threshold, are calculated, and only gray scale values of the gray scale image which lie above the gray scale value threshold are employed as binary picture elements,
- the picture elements of the binary image are tested for plausibility as crack indications, through comparison of their length/width ratio and/or their area with the crack recognition threshold value,
- all binary information which gives no indication of crack-like structures is discarded and remaining picture elements are signalled and/or registered as faults and/or are sent as control signals to a handling device.

2. Method according to claim 1, characterised in that several images, resolved into gray scale steps, are summed.

3. Method according to claim 1 or 2, characterised in that the workpiece surface is pre-treated with the aid of the magnetic powder or colour impregnating process, or with the aid of contrast enhancing agents.

4. Device for detecting and evaluating surface cracks on workpieces (1), the surface of which is pre-treated with crack revealing agents, comprising in accordance with the method of claims 1-3 an imaging camera (3) from which the image of the workpiece surface is sent to a digital image processing unit (8) where the image, resolved into digitised gray scale steps, is processed in such a manner that a binary image of possible cracks is produced and, when a predetermined crack recognition threshold value - characteristic of the presence of cracks - is exceeded, a discrimination result is triggered, characterised by a handling device (2) holding the workpiece (1), a colour camera (3) equipped with an optical filter (5) tuned to the light produced by the crack revealing agents, a subsequent colour mixing unit (6) for mixing the colours red, green and blue in such a ratio that the background and noise signals are filtered out or certain regions of the image are accentuated, an analog-digital converter (7) and a digital image processing unit (8) having an image store and a processor unit, in which, from the image values, gray scale images, resolved into the digitised gray scale steps, are produced, the original gray scale image is subjected to high-pass filtering or is subtracted from a low-pass version of the gray scale image, the thus obtained gray scale image is binarised, following calculation of a dynamic gray scale value threshold, the picture elements of the binary image are tested by means of the crack recognition threshold value for plausibility as crack indications and all binary information which gives no indication of crack-like structures is discarded, remaining picture elements being signalled and/or registered as faults and/or being sent as control signals to a handling device.

## Revendications

1. Procédé pour la détermination et l'évaluation da fissures de surface sur des pièces dans lequel on traite au préalable les surfaces de la pièce par des agents de révélation de fissures, on prend une image de la surface de la pièce au moyen d'une caméra, on décompose ladite image en plages digitalisées en demi-teinte et an traite ladite image au moyen d'un ordinateur de telle manière qu'on obtient une image binaire des éventuelles fissures et qu'on effectue un tri lors d'un dépassement d'une valeur seuil de reconnaissance d'une fissure caractéristique de la présence de fissures, définie au préalable, caractérisé
- en ce que l'image est réalisée au moyen d'une caméra couleur avec laquelle le fond est supprimé à l'aide d'un filtre adapté à la lumière émise par les agents de révélation des fissures,
- en ce que l'image en demi-teinte d'origine, obtenue à partir des valeurs d'image dans les images en demi-teinte décomposées en plages digitalisées en demi-teinte, est soumise à un filtre passe-haut ou en ce qu'on la soustrait d'une version passebas de l'image en demi-teinte
- en ce qu'on rend l'image en demi-teinte ainsi obtenue binaire en calculant dans l'image passe-haut ou dans l'image différentielle des valeurs moyennes de la répartition de la demi-teinte et des déviations standard de la proportion de bruit et à partir de celles-ci une valeur seuil de demi-teinte dynamique et en ce qu'on n'utilise comme points d'image binaires que les demi-teintes de l'image en demi-teinte supérieures à la valeur seuil de demi-teinte,
- en ce que les points d'image de l'image binaire sont testées sur la vraisemblance de représentation d'une fissure en comparant leurs rapports longueur-largeur et/ou leurs surfaces à la valeur seuil de reconnaissance de fissures,
- en ce que toutes les informations binaires qui ne concernent pas des structures analogues à des fissures sont rejetées et en ce que les points d'image qui restent sont indiqués et/ou enregistrés comme défauts et/ou envoyés comme signal de commande vers un appareil de manipulation.

2. Procédé selon la revendication 1, caractérisé en ce qu'on additionne plusieurs images décomposées en plages en demi-teinte.

3. Procédés selon une quelconque des revendications 1 ou 2, caractérisé en ce qu'on traite au préalable la surface de la pièce à l'aide du procédé à la poudre magnétique ou de pénétration de couleur et/ou d'agents d'accentuation du contraste,

4. Dispositif pour la détermination et l'évaluation de fissures de surface sur des pièces (1) dont la surface a été traitée au préalable par des agents de révélation de fissures selon le procédé conformément aux revendications 1 à 3, constitué par une caméra (3) à partir de laquelle l'image de la surface de la pièce est acheminée vers une unité digitale de traitement d'images (8) dans laquelle l'image, décomposée en plages digitales en demi-teinte, est traitée de telle manière qu'on obtient une image binaire d'éventuelles fissures et qu'on effectue un tri lorsqu'une valeur seuil de reconnaissance de fissures prédéfinie, caractéristique de la présence de fissures est dépassée, caractérisé par un appareil de manipulation (2) maintenant la pièce (1), par une caméra équipée d'un filtre (5) optique adapté à la lumière émise par les agents de révélation des fissures, par une unité de mélange de couleurs (6) disposée après ladite caméra, servant à mélanger les couleurs rouge, vert et bleu en un rapport tel que les signaux du fond et les signaux perturbateurs sont éliminés par filtration ou que certaines plages de l'image sont mises en évidence, par un convertisseur analogique-digital (7) et par une unité digitale de traitemont d'images (8) comportant une enregistreur d'images et un ordinateur dans lequel l'image en demi-teinte d'origine, obtenue à partir des valeurs d'image dans les images en demi-teinte décomposées en plages digitalisées en demi-teinte, est soumise à un filtre passe-haut ou est soustraite d'une version passe-bas de l'image en demi-teinte, dans lequel l'image en demi-teinte ainsi obtenue est rendue binaire aprés le calcul d'une valeur seuil de demi-teinte dynamique, dans lequel les points d'image de l'image binaire sont testés sur la vraisemblance de représentation d'une fissure au moyen de la valeur seuil de reconnaissance d'une fissure et dans lequel toutes les informations binaires, qui ne concernent pas des structures analogues à des fissures, sont rejetées, les points d'image restant étant indiqués et/ou enregistrés comme défauts et/ou envoyés comme signal de commande vers un appareil de manipulation.
